Europäisches Patentamt

European Patent Office

Office européen des brevets

(19)

(11) Veröffentlichungsnummer: **0 203 364 B1**

# EUROPÄISCHE PATENTSCHRIFT

(12)

(45) Veröffentlichungstag der Patentschrift: 02.05.91

(21) Anmeldenummer: 86105579.6

(22) Anmeldetag: 22.04.86

(51) Int. Cl.⁵: **G01L 9/00**, G01F 23/14, G01G 5/06

(54) **Fluidlagerung eines Kolbens einer Druckmesseinrichtung.**

(30) Priorität: 25.04.85 DE 3514911

(43) Veröffentlichungstag der Anmeldung:
03.12.86 Patentblatt 86/49

(45) Bekanntmachung des Hinweises auf die
Patenterteilung:
02.05.91 Patentblatt 91/18

(84) Benannte Vertragsstaaten:
BE CH DE FR GB LI NL

(56) Entgegenhaltungen:
FR-A- 2 515 819

REGELUNGSTECHNISCHE PRAXIS, 1975, Nr.
4, Seiten M13-M16, München, DE; H.G.
STROHRMANN: "Lösungen von MSR-
Aufgaben"

IBM TECHNICAL DISCLOSURE BULLETIN,
Band 24, Nr. 11B, April 1982, Seiten
6068-6069, New York, US; J.P. GALLAGHER:
"Liquid level sensing"

(73) Patentinhaber: Pfister GmbH
Stätzlinger Strasse 70
W-8900 Augsburg(DE)

(72) Erfinder: Häfner, Hans W.
Fichtenweg 15
W-8890 Aichach-Walchshofen(DE)

(74) Vertreter: Kahler, Kurt, Dipl.-Ing.
Postfach 1249 Gerberstrasse 3
W-8948 Mindelheim(DE)

**Beschreibung**

Die Erfindung betrifft eine Einrichtung zum Messen eines über ein gasförmiges Medium auf einen Kolben ausgeübten Drucks gemäß dem Oberbegriff des Patentanspruchs 1 bzw. 4 sowie eine Tankwägeeinrichtung gemäß dem Oberbegriff des Anspruchs 8.

Es sind Druckmesseinrichtungen bekannt, bei denen zur Lagerung des Kolbens in dem Zylinder unter Druck eine Flüssigkeit zugeführt wird. Hierbei ergibt sich das Problem, daß ein Teil dieser Lagerflüssigkeit in den Zylinderraum austritt, der mit dem den Druck übertragenden Gas gefüllt ist. Mit der Zeit würde sich der gesamte Zylinderraum füllen und die Lagerflüssigkeit in der Zuführungsleitung hochsteigen.

Aus der DE-A-33 02 175 ist es bekannt, zum Messen des Flüssigkeitsdrucks in einem Tank eine Trennkammer anzuordnen, auf die der Flüssigkeitsdruck einwirkt und die diesen auf eine Flüssigkeit überträgt, die den Zylindrraum und die Zuführungsleitung ausfüllt und die die Lagerflüssigkeit ist. Über ein Regelsystem wird jeweils soviel Lagerflüssigkeit aus dem System abgezogen, als aus den hydrostatischen Lagern in den Zylinderraum austritt. Die Anordnung wird hierdurch verhältnismäßig kompliziert. Soll ein Differenzdruck gemessen werden, so wird der zweite Druck an die zweite Fläche des Kolbens angelegt, wobei jedoch die gesamte Anordnung in einem luftdichten Gefäß angeordnet werden muß.

Die DE-A-31 43 919 beschreibt eine Druckmesseinrichtung der gattungsgemäßen Art, bei der als Fluid für die Lagerung des Kolbens ein Gas, insbesondere Luft, verwendet wird. Der Kolbenmantel ist in der Nähe der belasteten Kolbenfläche mit einer ringförmigen Entlüftungstasche versehen, über die aus den Lagern austretendes Gas aus dem Zylinder abgeleitet wird. Hierbei besteht die Gefahr, daß das die Kolbenfläche belastende Gas in die Entlüftungstasche gelangen kann und das Meßergebnis verfälscht wird.

Der Erfindung liegt die Aufgabe zu Grunde, eine Druckmeßeinrichtung der gattungsgemäßen Art anzugeben, bei der in den durch die belastete Kolbenfläche abgeschlossenen Raum eintretende Lagerfluid das Meßergebnis nicht beeinträchtigt.

Diese Aufgabe wird erfindungsgemäß gelöst durch eine Druckmeßeinrichtung mit den Merkmalen des Patentanspruchs 1.

Eine alternative Lösung der genannten Aufgabe ist durch die Merkmale des Patentanspruchs 4 angegeben. Ferner soll eine Tankwägeeinrichtung geschaffen werden, die eine besonders exakte Bestimmung der Höhe, Dichte, Masse und/oder als Volumen einer in einem Tank enthaltenden Flüssigkeit ermöglicht. Eine derartige Tankwägeeinrichtung besitzt die Merkmale des Patentanspruchs 8.

Bevorzugte Weiterbildungen der erfindungsgemäßen Druckmeßeinrichtung und der diese verwendenden Tankwägeeinrichtung ergeben sich aus den abhängigen Ansprüchen.

Ausführungsbeispiele der erfindungsgemäßen Druckmeßeinrichtung werden nachstehend anhand der Zeichnung näher erläutert. Es zeigen

Fig. 1      eine Prinzipdarstellung einer ersten Ausführungsform der erfindungsgemäßen Druckmeßeinrichtung, bei der als Lagerfluid eine Flüssigkeit verwendet wird;

Fig. 2      die Ausführungsform nach Fig. 1, ausgestaltet als Differenzdruckmeßeinrichtung;

Fig. 3      eine Abwandlung der Ausführungsform nach Fig. 2;

Fig. 4      den Einsatz der Ausführungsform der erfindungsgemäßen Druckmeßeinrichtung gemäß Fig. 3 bei einer Tankwägeeinrichtung;

Fig. 5      eine Abwandlung der Ausführungsform nach Fig. 4 zur Berücksichtigung von Schwimmdacheinflüssen;

Fig. 6      eine Prinzipdarstellung einer alternativen Ausführungsform der erfindungsgemäßen Druckmeßeinrichtung, bei der das Lagerfluid ein Gas ist;

Fig. 7-8      eine Ausgestaltung der Ausführungsform nach Fig. 6 zur Differenzdruckmessung in Anwendung auf eine Tankwägeeinrichtung, und

Fig. 9-10      Ausführungsformen ähnlich derjenigen der Fig. 7 und 8, eingesetzt bei einer Tankwägeeinrichtung mit Dichte-, Volumen- und/oder Massebestimmung.

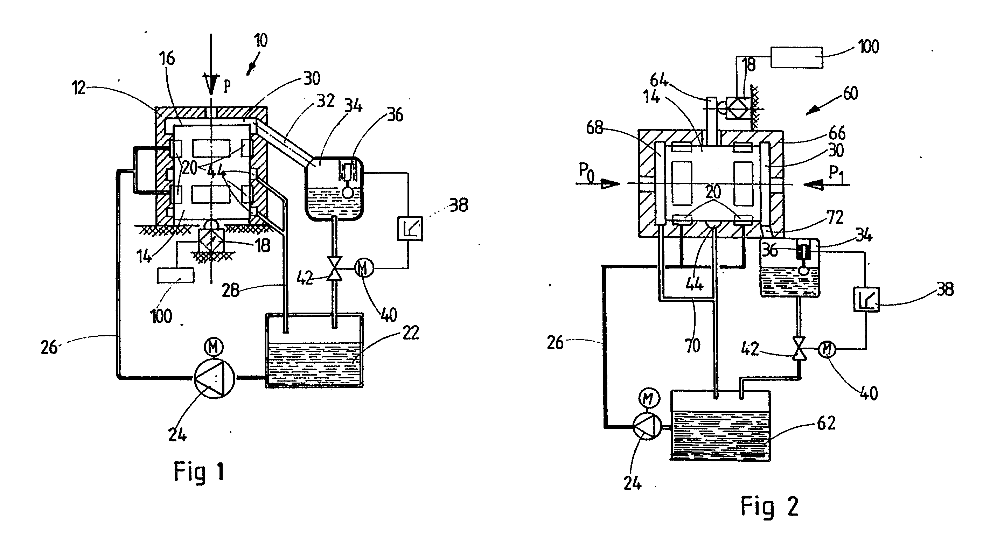

Fig. 1 zeigt gemäß einer ersten Ausführungsform eine Druckmeßeinrichtung 10 mit einem auf einer Grundfläche abgestützten Zylinder 12, in dem ein Kolben 14 praktisch reibungslos geführt ist, auf dessen obere Kolbenfläche 16 über ein Gas ein Druck P ausgeübt wird, der mittels einer Kraftmeßvorrichtung etwa einer Kraftmeßzelle 18 beliebiger Art gemessen wird, gegen die der Kolben 14 in Richtung des Pfeiles P drückt. Die Kraftmeßzelle liefert ein Signal an eine Auswertevorrichtung 100.

Die praktisch reibungslose Lagerung des Kolbens 14 in dem Zylinder 12 erfolgt über hydrostatische Lager 20, wie sie beispielsweise aus der DE-OS 31 43 919 bekannt sind. Hierzu wird aus einem Tank 22 über eine Pumpe 24 und eine Zuführungsleitung 26 unter Druck eine Lagerflüssigkeit, etwa ein Öl, zugeführt. Ein Teil der Lagerflüssigkeit sammelt sich in Taschen 44. Es dringt jedoch auch Lagerflüssigkeit in den über der Kolbenfläche 16 liegenden Zylinderraum 30, der mit der Zeit von der Lagerflüssigkeit ausgefüllt würde, was zu einer Beeinträchtigung des Meßergebnisses führen würde. Gemäß der Erfindung ist deshalb eine kontrollierte Rückleitung dieser Lagerflüssigkeit aus dem Zylinderraum 30 vorgesehen. Hierzu führt eine Leitung 32 vom Zylinderraum 30 in ein geschlossenes Auffanggefäß 34, das somit unter dem gleichen Druck steht, wie der Zylinderraum 30. Die Menge der Lagerflüssigkeit in dem Gefäß 34 wird nun ständig auf einen vorbestimmten Pegel gehalten. Hierzu ist eine Pegelfeststellvorrichtung 36 vorgesehen, die beispielsweise die Form eines Schwimmers haben kann, dessen Position vorzugsweise optisch oder elektrisch festgestellt wird. Bei Überschreiten eines bestimmten Pegels wird eine Regeleinrichtung 38 aktiviert, die ein Entleerungsventil 42 vorzugsweise über einen Motor 10 solange öffnet, bis der Lagerflüssigkeitsstand wieder unter den Sollpegel abgesunken ist. Die Lagerflüssigkeit fließt zurück in den Tank 22, so daß sich ein geschlossenes System ergibt, bei dem kein Nachfüllen von Lagerflüssigkeit erforderlich ist.

Die erfindungsgemäße Einrichtung kann überall dort verwendet werden, wo ein Druck über ein Gas übertragen und möglichst genau gemessen werden soll.

Fig. 2 zeigt eine Abwandlung der Ausführungsform nach Fig. 1 zur Messung einer Differenzkraft bzw. eines Differenzdrucks. Die bereits bei der ersten Ausführungsform vorhandenen und erläuterten Elemente der Einrichtung sind mit den gleichen Bezugszeichen versehen und werden nicht nochmals erläutert.

Bei der Differenzdruckmeßeinrichtung 60 dieses zweiten Ausführungsbeispiels ist der Kolben 14 in einem Zylinder 66 geführt, und es werden an gegenüberliegenden Seiten die Drücke $P_1$ und $P_0$ über ein Gas ausgeübt. Sich im Zylinderraum 30 ansammelnde Lagerflüssigkeit wird wiederum über eine Öffnung 72 in das Gefäß 34 abgeleitet.

Bei der zweiten Ausführungsform ist der Behälter 62 druckdicht ausgeführt, und der Zylinderraum 68 steht zur Ableitung von Lagerflüssigkeit über eine Leitung 70 mit dem Tank 62 in Verbindung. Am Kolben 14 ist seitlich ein Übertragungsglied 64 angeordnet, das auf die Druckmeßvorrichtung 18 einwirkt, die die Differenz $P_1 - P_0$ mißt.

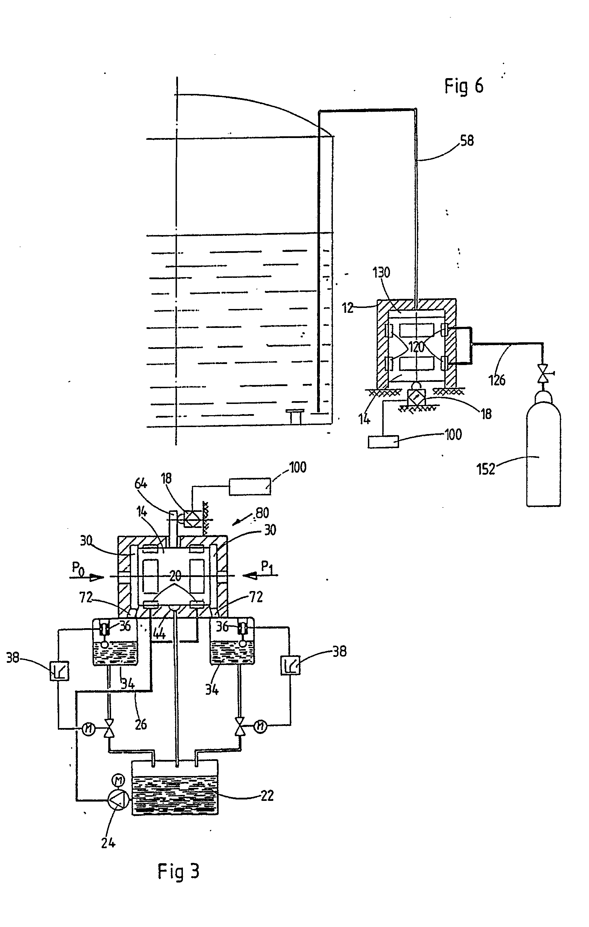

Andererseits besteht auch die Möglichkeit, die Differenzdruckmeßeinrichtung symmetrisch auszubilden, wie dies anhand der Differenzdruckmeßeinrichtung 80 der Fig. 3 dargestellt ist, die dann mit offenem Tank 22 arbeiten kann.

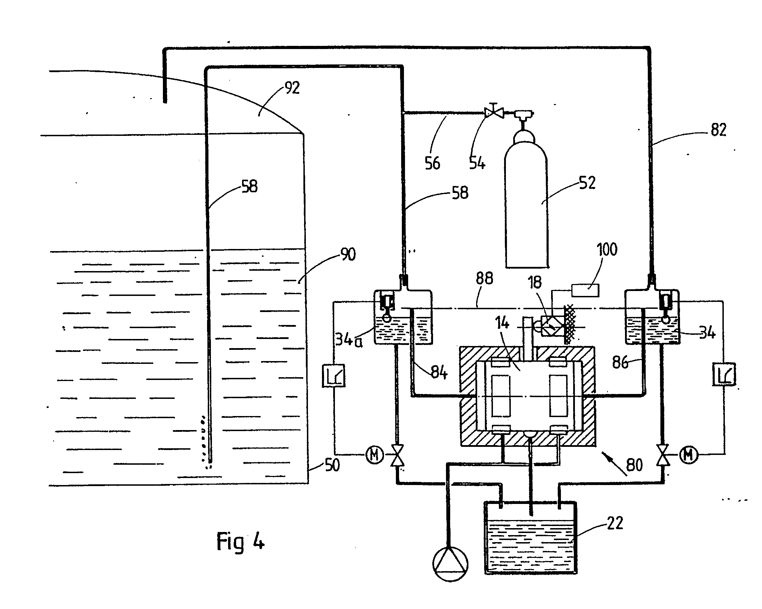

Fig. 4 zeigt eine beispielsweise, bevorzugte Anwendung der Differenzdruckmeßeinrichtung 80 der Fig. 3 als Tankwägeeinrichtung. Diese arbeitet mit einem Perlrohr 58, das von einer Gasflasche 52 über ein Einstellventil 54 und eine Leitung 56 gespeist wird. Bekanntlich entspricht der im Perlrohr 58 stehende Druck demjenigen Druck, der in der Ebene des Perlrohrausgangs im Tank 50 herrscht. Für die Bestimmung der Masse der Flüssigkeit 90 ist es erforderlich, den bei geschlossenem Tank 50 sich über der Flüssigkeit bildenden Dampfdruck im Raum 92 zu berücksichtigen. Dieser Druck wird über eine Leitung 82, das Gefäß 34 und eine Leitung 86 an die eine Seite des Kolbens 14 angelegt, während der auf der Leitung 58 anstehende Druck über das Gefäß 34a und eine Leitung 84 an die andere Fläche des Kolbens angelegt wird. Die Kraftmeßvorrichtung 18 zeigt dann die Differenz der beiden Drucke an, aus der sich die Masse der Flüssigkeit im Tank 50 in bekannter Weise errechnen läßt.

In den beiden Leitungen 84, 86 steigt die Lagerflüssigkeit hoch und läuft in den Gefäßen 34 bzw. 34a über. Die in diesen Gefäßen sich befindlichen Öffnungen der Leitungen 84 und 86 sind bevorzugt in gleichem Niveau 88 angeordnet.

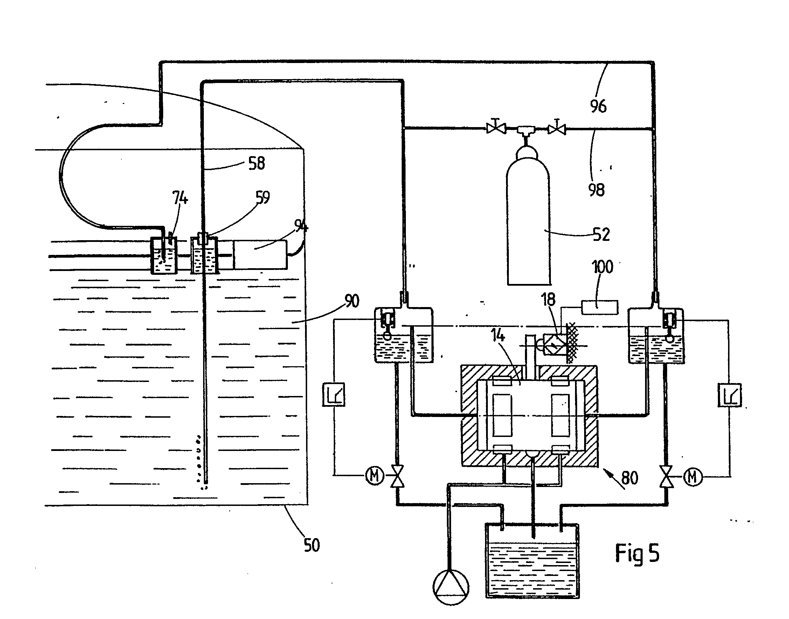

Fig. 5 zeigt eine Weiterentwicklung der Anlage nach Fig. 4, wobei Einflüsse des Schwimmdachs auf die Masse der sich im Tank 50 befindlichen Flüssigkeit 90 kompensiert werden.

Das Perlrohr 58 ist bei dieser Ausführungsform möglichst reibungsfrei durch ein Schwimmdach 94 hindurchgeführt. Alternativ dazu kann das Perlrohr aber auch seitlich am Tank 50 an jeder beliebigen Stelle abgedichtet und starr eingeführt sein.

Ein weiteres Perlrohr 96 endet in einem im Schwimmdach 94 ausgebildeten Gefäß 74, dessen Perlöffnung in der Niveauhöhe des Schwimmdachs 94 angeordnet ist. Das zweite Perlrohr 96 ist im Bereich des Tanks 50 flexibel, so daß es ohne weiteres der Bewegung des Schwimmdachs 94 folgen kann. Die Flüssigkeit steigt im Gefäß 74 gerade so hoch, wie es dem durch das Schwimmdach 94 auf die Flüssigkeit ausgeübten Druck entspricht. Das Perlrohr 96 stellt diesen Druck fest und leitet ihn an die eine Fläche des Kolbens 14, während an der anderen der mittels des ersten Perlrohres 58 festgestellte Druck anliegt. Die Druckmeßvorrichtung 18 zeigt somit wiederum die Druckdifferenz an, die zur Berechnung der Masse des Tankinhalts verwendet werden kann.

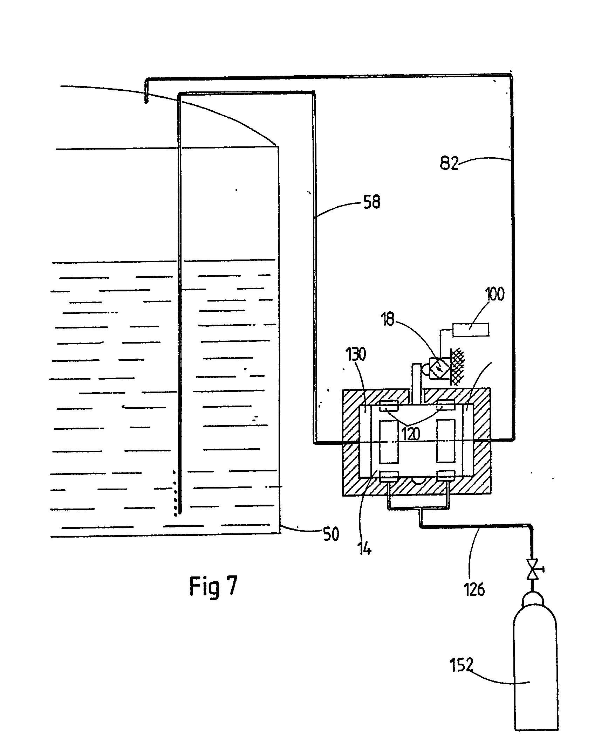

Die Fig. 6 bis 8 zeigen eine alternative Ausführungsform der Druckmeßeinrichtung in Anwendung auf Tankwägeeinrichtungen entsprechend den Fig. 4 und 5.

Aus Fig. 6 ist deutlich das Prinzip der Druckmeßeinrichtung gemäß der alternativen Ausführungsform erkennbar. Der Kolben 14 ist wiederum im Zylinder 12 praktisch reibungsfrei geführt und drückt gegen die Kraftmeßeinrichtung 18. Die Lagerung erfolgt bei dieser Ausführungsform dadurch, daß anstelle einer Lagerflüssigkeit ein Lagergas verwendet wird. Die Anordnungen nach den Fig. 4 und 5 vereinfachen sich damit in überraschender Weise, da für das Perlrohr 58 keine eigene Gasversorgung erforderlich ist, sondern das aus den Lagern 120 in den Zylinderraum 130 austretende Gas verwendet wird. Das Gas, vorzugsweise Luft, wird von einer vorzugsweise einstellbar en Gasquelle 152 über die Leitung 126 an die Lager 120 geliefert.

Während Fig. 6 eine Druckmeßeinrichtung mit Absolutmessung zeigt, veranschaulicht Fig. 7 eine Differenzdruckmeßeinrichtung 180 in entsprechender Anwendung auf eine Tankwägeeinrichtung ähnlich derjenigen in Fig. 4. Auch hier ist eine Ableitung des Lagermediums nicht erforderlich, da das in den Zylinderraum 130 austretende Lagergas vorteilhaft für die Versorgung des Perlrohres 58 verwendet wird.

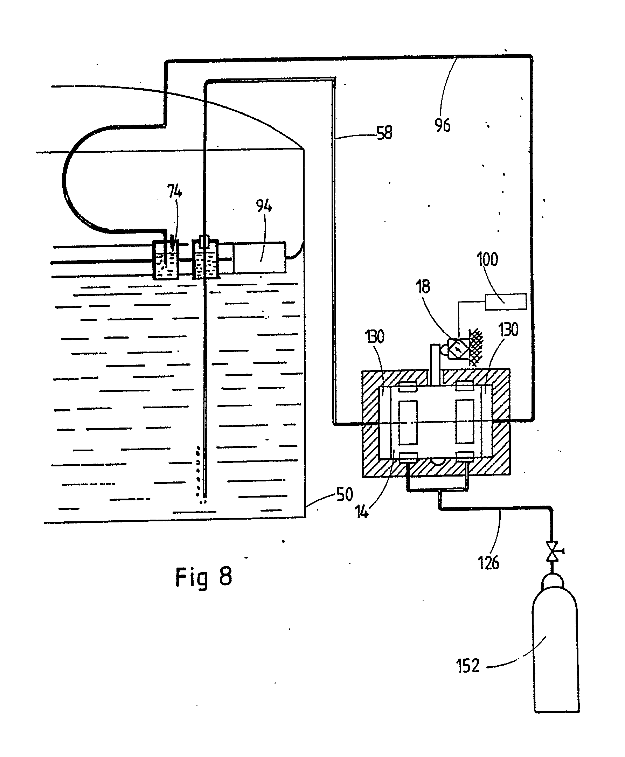

Die Ausführungsform nach Fig. 8 entspricht derjenigen nach Fig. 5 unter Verwendung einer Differenzdruckmeßeinrichtung 180 mit Gaslagerung.

Gerade die Ausführungsbeispiele nach Fig. 7 und 8 zeigen die besondere Vereinfachung bei Tankwägeeinrichtungen, wobei keinerlei zusätzliche Vorkehrungen bezüglich der Explosionssicherheit erforderlich sind.

Die Ausführungsform nach Fig. 1 laßt sich in gewissen Fallen weiter dadurch vereinfachen, daß ein geschlossener Tank 22 verwendet wird und die Leitung 32 den Zylinderraum 30 direkt mit dem Inneren des Tanks 22 verbindet.

Die Höhe des Pegels im Sammelgefäß 34 kann bevorzugt dadurch auf einen konstanten Wert geregelt werden, daß das Ventil 42 mehr oder weniger geöffnet wird, so daß genausoviel Lagerflüssigkeit abfließt, als in den Zylinderraum 30 eindringt.

Der Pegel im Sammelgefäß 34 wird bevorzugt unter das Niveau des Zylinderraums 30 gelegt, so daß jegliche in letzteren eindringende Lagerflüssigkeit abfließt.

Bei Tankwägeeinrichtungen ohne Schwimmdach wird als Gas bevorzugt ein Schutzgas, bevorzugt Stickstoff, verwendet, das Explosionen sicher verhindert.

In der Auswerteeinrichtung 100, die das Signal der Kraftmeßzelle 18 empfängt, läßt sich aus dem somit festgestellten hydrostatischen Druck, bekannten geometrischen Abmessungen des Tanks und der bekannten Dichte gegebenenfalls unter Berücksichtigung der Temperatur der Flüssigkeit, deren tatsächliche Höhe, das Volumen und/oder die Masse bestimmen. Ein noch genaueres Ergebnis erhält man dann wenn nicht eine theoretische Dichte verwendet wird, sondern diese Dichte ʃ der Flüssigkeit tatsächlich festgestellt wird.

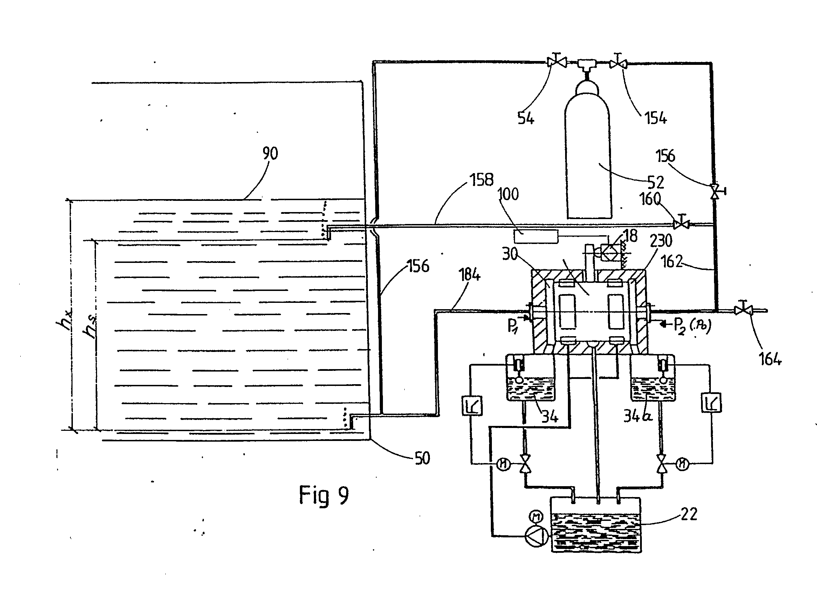

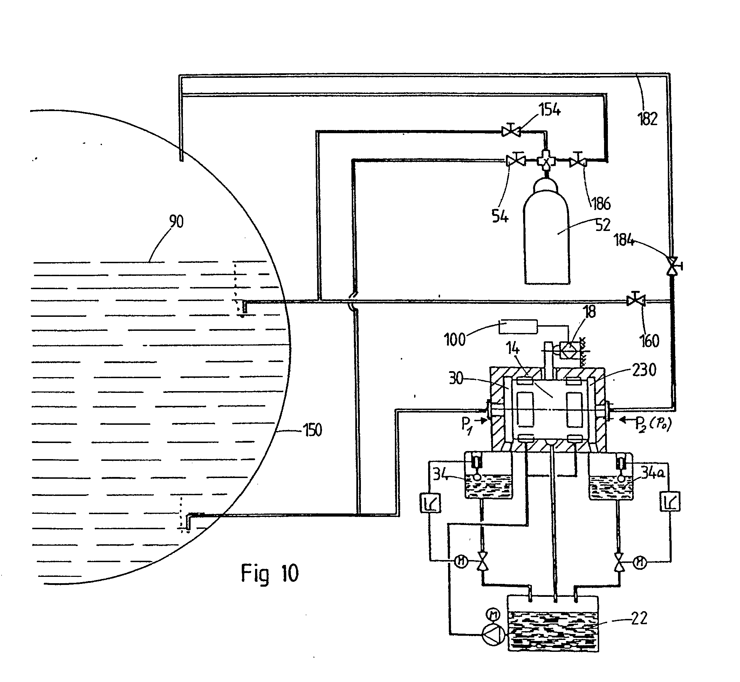

Die Figuren 9 und 10 zeigen Ausführungsbeispiele, bei denen die erfindungsgemäße Druckmeßeinrichtung zur Bestimmung der Dichte ʃ und der tatsächlichen Höhe einer Flüssigkeit in einem Tank mit sich änderndem Querschnitt bestimmt werden kann. Diese Parameter können dann erforderlich sein, wenn die Masse bzw. das Volumen noch genauer bestimmt werden sollen. Ferner ist die Anzeige der tatsächlichen Höhe von Bedeutung für den Füllstand der Flüssigkeit, um ein Überlaufen zu vermeiden.

Es sei darauf hingewiesen, daß zwar die Ausführungsform gemäß Fig. 3 der erfindungsgemäßen Druckmeßeinrichtung bei den Systemen der Figuren 9 und 10 verwendet wird, daß jedoch auch die anderen beschriebenen Vorrichtungen dafür in Frage kommen.

Bekanntlich gilt:
$p = h_x \cdot ʃ \cdot g$ und
$\Delta p = h_s \cdot ʃ \cdot g$
woraus folgt
$h_x = h_s \frac{p}{\Delta p}$
ferner ist $M = ʃ \cdot V$ und

$$V = \int_0^{h_x} Q(x)\, dx$$

wobei p = hydrostatischer Druck zwischen der Flüssigkeitsoberfläche und dem unteren Perlrohr.
$\Delta p$ = hydrostatische Druckdifferenz zwischen den beiden Perlrohren.
$h_s$ = Höhendifferenz zwischen den beiden Perlrohren;
$h_x$ = Höhe der Flüssigkeit über dem unteren Perlrohr,
ʃ = Dichte der Flüssigkeit,
M = Masse der Flüssigkeit,
V = Volumen der Flüssigkeit;
Q(x) = variabler Tankquerschnitt in der Höhe $h_x$.

Zur Bestimmung dieser Parameter zeigt Fig. 9 die Ausführungsform der Druckmeßeinrichtung gemäß Fig. 3 in Anwendung zusammen mit einem Tank 50, der Flüssigkeit 90 enthält. Von einer Gasquelle 52 wird dosiert über ein Ventil 54 Gas, vorzugsweise Luft, einem ersten Perlrohr 156 zugeführt, das über eine Leitung 184 mit der linken Zylinderkammer 30 in Verbindung steht. Über ein weiteres Dosierventil 154 wird über geöffnete Ventile 156, 160 einem zweiten Perlrohr 158 ebenfalls Gas, vorzugsweise Luft zugeführt. Zwischen den beiden Ventilen 156, 160 ist eine Leitung 162 angeschlossen, die zur rechten Zylinderkammer 230 führt. Die Zylinderkammer 230 kann auch bei geschlossenen Ventilen 156, 160 über ein Ventil 164 mit atmospherischem Druck oder einem beliebigen anderen Druck beaufschlagt werden. Bei geschlossen Ventilen 160, 164 und geöffnetem Ventil 156 liegt die Gasquelle 52 an der rechten Zylinderkammer 230.

Die Arbeitsweise dieses Meßsystems gemäß Fig. 9 ist wie folgt:

Bei geöffneten Ventilen 156, 160 und geschlossenem Ventil 164 wird Gas aus der Gasquelle 52 an die Perlrohre 156, 158 gelegt, in denen sich ein von der Höhe der Flüssigkeit 90 im Tank 50 abhängiger Druck $p_1$ bzw. $p_2$ aufbaut. Das Kraftmeßelement 18 stellt dann den Differenzdruck $\Delta P = p_1 - p_2$ fest, der einer Auswertevorrichtung 100 zugeführt wird, die gemäß dem vorgenannten Gleichungen die Dichte $\rho$ bestimmt. Es werden nun die Ventile 156, 160 geschlossen und bei nach oben offenem Tank 50 durch Öffnen des Ventils 164 atmosphärischer Druck an die rechte Zylinderkammer 230 gelegt. Das Kraftmeßelement 18 mißt nun die Druckdifferenz $p = p_1 - P_0$, wobei $p_0$ der atmospherische Druck ist. In der Auswertevorrichtung 100 kann dann die tatsächliche Flüssigkeitshöhe $h_x$ errechnet werden. Diese dient einerseits als tatsächliche Füllstandsanzeige und zum anderen zur genauen Berechnung des Volumens und/oder der Masse der im Tank 50 befindlichen Flüssigkeit 90. Hierbei läßt sich mittels einer Eichkennlinie auch eine etwaige Verformung des bisher als exakt zylindrisch angenommenen Tanks berücksichtigen.

Diese Tatsache ist insbesondere dann von Bedeutung wenn nicht ein zylindrischer Tank verwendet wird, sondern wie bei dem Ausführungsbeispiel nach Fig. 10 gezeigt, beispielsweise ein Kugeltank 150. Als weitere Abweichung dieser Ausführungsform gegenüber derjenigen nach Fig. 9 wird angenommen, daß es sich bei dem Kugeltank 150 um einen geschlossenen Tank handelt, wobei der Gasdruck wie bei den Ausführungsbeispielen der Fig. 4 und 7 über eine Leitung 182 und ein Ventil 184 bei geschlossenem Ventil 160 an die rechte Zylinderkammer 230 gelegt wird.

Die Arbeitsweise dieser Tankmeßeinrichtung entspricht derjenigen der Fig. 9 mit der Abweichung, daß an Stelle des atmospherischen Drucks $p_0$ durch Öffnen des Ventils 184 und Schließen des Ventils 160 der Gasdruck $p_0$ aus dem Raum oberhalb der Flüssigkeit 90 an die rechte Kammer 230 angelegt wird. Der hydrostatische Druck der Flüssigkeit ergibt sich dann wiederum mit $p = P_1 - p_0'$, woraus sich wiederum die tatsächliche Höhe $h_x$ der Flüssigkeit bestimmen läßt.

Falls erwünscht, kann durch Öffnen eines Ventils 186 Gas von der Gasquelle 52 in den Raum oberhalb der Flüssigkeit 90 eingeleitet werden, wodurch sich eine Verschiebung der Druckverhältnisse ergibt.

## Ansprüche

1. Einrichtung zum Messen eines über ein gasförmiges Medium auf einen Kolben (14) ausübbaren Drucks, wobei der Kolben (14) in einem Zylinder (12) dadurch praktisch reibungsfrei in Lagern (20) geführt ist, daß die Lager (20) unter Druck mit einem Fluid versorgbar sind, und der Kolben (14) gegen eine Kraftmeßvorrichtung (18) anliegt, dadurch gekennzeichnet, daß das Fluid eine Flüssigkeit ist und die in einen das gasförmige Medium enthaltenden Raum (30) des Zylinders (12) austretende Flüssigkeit geregelt entfernbar ist.

2. Einrichtung nach Anspruch 1, dadurch gekennzeichnet, daß der Zylinderraum (30) über eine Leitung (32) mit einem Sammelgefäß (34) in Verbindung steht, in das in den Zylinderraum (30) austretende Flüssigkeit abführbar ist, und daß eine Vorrichtung (38, 40, 42) zum Konstanthalten des Flüssigkeitspegels in dem Sammelgefäß (34) durch geregeltes Ableiten von Flüssigkeit, bevorzugt über eine Pegelstandsanzeige (36) vorgesehen ist.

3. Einrichtung nach Anspruch 1 oder 2, dadurch gekennzeichnet, daß die aus dem Zylinderraum (30) entfernte Flüssigkeit wieder den Lagern (20) kontrolliert zuführbar ist.

4. Einrichtung zum Messen eines über ein gasförmiges Medium auf einen Kolben (14) ausübbaren Drucks, wobei der Kolben (14) in einem Zylinder (12) dadurch praktisch reibungsfrei in Lagern geführt ist, daß die Lager (20) unter Druck mit Gas versorgbar sind, und der Kolben gegen eine Kraftmeßvorrichtung (18) anliegt, dadurch gekennzeichnet, daß in einen Zylinderraum (30), in dem sich das auf den Kolben (14) drückende gasförmige Medium befindet, austretendes Lagergas zum Druckaufbau in einer mit dem Zylinderraum (30) verbundenen Leitung (58) verwendbar ist.

5. Einrichtung nach einem der vorhergehenden Ansprüche, dadurch gekennzeichnet, daß die Einrichtung als Differenzdruckmeßeinrichtung (60; 80; 180) ausgestaltet ist, derart, daß ein weiterer Zylinderraum (30; 68) gebildet ist, in dem sich ein weiteres gasförmiger Medium befindet, das unter Druck gegen den Kolben (14) in entgegengesetzter Richtung zum ersten Druck anliegt.

6. Einrichtung nach Anspruch 5 und 1 bis 3 dadurch gekennzeichnet, daß ein Vorratstank (62) für die Lagerflüssigkeit vorgesehen ist, aus dem diese in die Lager (20) pumpbar ist, daß der Vorratstank (62) geschlossen ist und der weitere Zylinderraum (68) über eine Leitung (17) mit ihm in Verbindung steht.

7. Einrichtung nach Anspruch 5 und 1 bis 3, gekennzeichnet durch die symmetrische Anordnung zweier Zylinderräume (30) auf gegenüberliegende Seiten des Kolbens (14) und je eines Sammelgefäßes (34) mit einem Vorratstank (22) für die Lagerflüssigkeit für die Lager (20) und in den aus den Sammelgefäßen (34) geregelt Lagerflüssigkeit abführbar ist.

8. Tankwägeeinrichtung mit einem eine Flüssigkeit enthaltenden Tank und einer Druckmeßeinrichtung nach einem der vorhergehenden Ansprüche, dadurch gekennzeichnet, daß ein Zylinderraum (30; 130) mit einem Perlrohr (58) verbunden ist, dessen Perlöffnung in Meßtiefe angeordnet ist, und der mittels der Kraftmeßeinrichtung (18) festgestellte hydrostatische Druck einer Auswertevorrichtung (100) zur Bestimmung des Volumens und/oder der Masse der Flüssigkeit zuführbar ist.

9. Tankwägeeinrichtung nach Anspruch 8, dadurch gekennzeichnet, daß die Druckmeßeinrichtung eine Differenzdruckmeßeinrichtung (80; 180) ist, deren einer Zylinderraum (30; 130) mit dem Perlrohr (58) in Verbindung steht, während der andere Zylinderraum (30; 130) über eine Leitung (82) bei geschlossenem Tank (50) mit dem oberhalb der Flüssigkeit sich befindenden Raum (92) in Verbindung steht.

10. Tankwägeeinrichtung nach Anspruch 8, dadurch gekennzeichnet, daß die Druckmeßeinrichtung eine Differenzdruckmeßeinrichtung (80; 180) ist, deren einer Zylinderraum (30; 130) mit einem ersten Perlrohr (58) in Verbindung steht, dessen Perlöffnung auf Meßtiefe im Tank (50) angeordnet ist, während der andere Zylinderraum (30; 130) mit einer in einem Schwimmdach (94) angeordneten, zur Flüssigkeitsoberfläche hin offenen Kammer (74) über ein zweites Perlrohr (96) in Verbindung steht, dessen Perlöffnung im Niveau des Schwimmdachs (94) angeordnet ist.

11. Tankwägeeinrichtung nach einem der Ansprüche 8 bis 10, dadurch gekennzeichnet, daß das Lagerfluid Gas ist und das in die Zylinderräume (130) austretende Lagergas den Perlrohren (58, 96) zuführbar ist.

12. Tankwägeeinrichtung nach einem der Ansprüche 8 bis 11, dadurch gekennzeichnet, daß das zur Bestimmung des Druckes in der zu wiegenden Flüssigkeit verwendete Perlrohr seitlich im unteren Bereich des Tanks (50) eingeführt ist.

13. Tankwägeeinrichtung nach einem der Ansprüche 8 bis 12, dadurch gekennzeichnet, daß ein anderer bzw. der andere Zylinderraum (230) mit einem zweiten Perlrohr (158) verbindbar ist, dessen Perlöffnung in einer anderen Tiefe angeordnet ist als diejenige des ersten Perlrohrs (156), und daß in der Auswertevorrichtung (100) aus der Differenz der in den Perlrohren (156, 158) herrschenden Drücke die Dichte der Flüssigkeit berechenbar ist.

14. Tankwägeeinrichtung nach Anspruch 13, dadurch gekennzeichnet, daß der andere Zylinderraum (230) wahlweise mit dem Druck am zweiten Perlrohr (158) oder dem atmosphärischen Druck bei offenem Tank (50) bzw. dem oberhalb der Flüssigkeit in einem geschlossenen Tank herrschenden Druck oder einem anderen Druck beaufschlagbar ist, so daß mit der Auswertevorrichtung (100) anhand der berechneten Dichte, dem festgestellten Differenzdruck und den geometrischen Abmessungen des Tanks (50; 150) die tatsächliche Höhe, das Volumen und/oder die Masse der im Tank befindlichen Flüssigkeit (90) bestimmbar ist.

**Claims**

1. Apparatus for measuring a pressure which may be applied onto a piston (14) by means of a gaseous medium, with the piston (14) being guided in a cylinder (12) essentially frictionless in bearings (20) such that the bearings (20) are adapted to be supplied with a fluid and with the piston (14) engaging a force measuring device (18),
characterized in that
the fluid is a liquid and the liquid leaking into a space (30) of the cylinder (12) containing said gaseous medium is removable in a controlled manner.

2. Apparatus of claim 1, characterized in that the cylinder space (30) is connected via a duct (32) to a collection container (34) to which the liquid leaking into the cylinder space (30) may be removed and that means (38, 40, 42) for maintaining the liquid at a constant level in the collecting container (34) are provided by controlled removal of liquid, preferably by means of a level indicating means (36).

3. Apparatus of claim 1 or 2, characterized in that the liquid removed from the cylinder space (30) may be re-supplied to the bearings (20) in a controlled manner.

4. Apparatus for measuring a pressure which may be exerted onto a piston (14) by means of a gaseous medium, with the piston (14) being guided in a cylinder (12) essentially friction-free in bearings such that the bearings (20) may be supplied under pressure with a gas, and with the piston engaging a force measuring device (18) characterized in that bearing gas leaking into a cylinder space (30) in which a gaseous medium is provided urging against the piston (14) may be used for pressure generation in a duct (58) connected with the cylinder space (30).

5. Apparatus of any of the preceding claims, characterized in that the apparatus is designed as a difference pressure measuring device (60; 80; 180) such that there is provided a further cylinder space (30; 68) containing a further gaseous medium urging under pressure against the piston (14) in opposite direction to the first pressure.

6. Apparatus of claims 5 and 1 to 3, characterized in that there is provided a supply tank (62) for the bearing liquid from which the latter may be pumped into the bearings (20), that the supply tank (62) is closed, and the further cylinder space (68) is connected thereto through a duct (17).

7. Apparatus of claims 5 and 1 to 3, characterized by the symmetrical arrangement of two cylinder spaces (30) on opposite sides of the piston (14) and a collection container (34) each having a supply tank (22) for the bearing liquid for the bearings (20) and into which bearing liquid may be removed from the collection containers (34).

8. Tank weighing apparatus including a tank containing a liquid, and a pressure measuring apparatus according to any of the preceding claims, characterized in that a cylinder space (30; 130) is connected to a bubble tube (58) the bubble opening of which is arranged in a measuring depth and that the hydrostatic pressure determined by means of the force measuring device (18) is supplied to an evaluation device (100) for determining the volume and/or the mass of the liquid.

9. Tank weighing apparatus according to claim 8, characterized in that the pressure measuring device is a differential pressure measuring device (80; 180) one cylinder space (30; 130) of which is connected to the bubble tube (58) whilst the other cylinder space (30; 130) with the tank (50) closed is connected to a space (92) above the liquid through a duct (82).

10. Tank weighing apparatus of claim 8, characterized in that the pressure measuring device is a differential pressure measuring device (80; 180) the one cylinder space (30; 130) of which is connected to a first bubble tube (58) whose bubble opening is arranged in measuring depth in the tank (50) whilst the other cylinder space (30; 130) is connected through a second bubble tube (96) to a chamber (74) provided in a swimming roof (94) and opening to the liquid surface the bubble opening of which being arranged at the level of the swimming roof (94).

11. Tank weighing apparatus of any of the claims 8 to 10, characterized in that the bearing fluid is gas and the bearing gas leaking into the cylinder spaces (130) may be supplied to the bubble tubes (58, 96).

12. Tank weighing apparatus of any of the claims 8 to 11, characterized in that the bubble tube used for determining the pressure in the liquid to be weighed is introduced laterally into the lower region of the tank (50).

13. Tank weighing apparatus of any of the claims 8 to 12, characterized in that a or the, respectively, other cylinder space (230) may be connected to a second bubble tube (158) the bubble opening of which being arranged in a different depth than that of the first bubble tube (156) and that in the evaluation means (100) the density of the liquid may be calculated from the difference of the pressures existing in the bubble tubes (156, 158).

14. Tank weighing apparatus of claim 13, characterized in that the other cylinder space (230) may be selectively supplied by the pressure at the second bubble tube (158) or the atmospheric pressure with the tank (50) open or, respectively, the pressure existing in a closed tank above the liquid or a different pressure such that by means of the evaluation means (100) based on the calculated density, the determined differential pressure and the geometric dimensions of the tank (50; 150) the actual height, the volume and/or the mass of the liquid (90) contained in the tank may be determined.

**Revendications**

1. Dispositif pour mesurer une pression pouvant être exercée sur un piston (14) par l'intermédiaire d'un milieu gazeux, le piston (14) étant, dans un cylindre (12), guidé pratiquement sans friction dans des paliers (20) par le fait que les paliers (20) peuvent être alimentés en fluide sous pression et que le piston (14) s'applique contre un dispositif de mesure de force (18), caractérisé en ce que le fluide est un liquide, qui s'écoule dans une chambre (30) du cylindre (12) contenant le milieu gazeux, et qui peut être évacué d'une manière régulée.

2. Dispositif selon la revendication 1, caractérisé en ce que la chambre cylindrique (30) est reliée par une conduite (32) à un récipient collecteur (34) dans lequel peut être évacué le liquide qui s'écoule dans la chambre cylindrique (30), et en ce qu'il est prévu un dispositif (38,40,42) pour maintenir constant le niveau du liquide dans le récipient collecteur (34) par une évacuation régulée de liquide, de préférence à l'aide d'une indication de niveau (36).

3. Dispositif selon la revendication 1 ou 2, caractérisé en ce que le liquide évacué de la chambre cylindrique (30) peut être ramené de manière contrôlée aux paliers (20).

4. Dispositif pour mesurer une pression exercée sur un piston (14) par l'intermédiaire d'un milieu gazeux, le piston (14) étant, dans un cylindre (12), guidé pratiquement sans friction dans des paliers par le fait que les paliers (20) peuvent être alimentés en gaz sous pression et que le piston s'applique contre un dispositif de mesure de force (18), caractérisé en ce que le gaz pour les paliers, qui s'écoule dans une chambre cylindrique (30) dans laquelle se trouve le milieu gazeux exerçant une pression sur le piston (14), peut, afin d'établir une pression, être évacué dans une conduite (58) reliée à la chambre cylindrique (30).

5. Dispositif selon l'une des revendications précédentes, caractérisé en ce que le dispositif est réalisé sous la forme d'un dispositif de mesure de pression différentielle (60; 80; 180), de telle sorte qu'est formée une autre chambre cylindrique (30; 68), dans laquelle se trouve un autre milieu gazeux qui s'applique sous pression contre le piston (14), en direction opposée de la première pression.

6. Dispositif selon les revendications 1 à 3 et 5, caractérisé en ce qu'il est prévu un réservoir de stockage (62) pour le liquide pour les paliers, à partir duquel ce liquide peut être pompé dans les paliers (20), en ce que le réservoir de stockage (62) est fermé et l'autre chambre cylindrique (68) est reliée au réservoir par l'intermédiaire d'une conduite (17).

7. Dispositif selon les revendications 1 à 3 et 5, caractérisé par la disposition symétrique de deux chambres cylindriques (30) sur des côtés opposés du piston (14), et d'un récipient collecteur respectif (34), avec un réservoir de stockage (22) destiné au liquide pour les paliers (20), réservoir dans lequel peut être évacué le liquide pour les paliers provenant d'une manière régulée des récipients collecteurs (34).

8. Dispositif de pesage de réservoir, avec un réservoir contenant un liquide et un dispositif de mesure de pression selon l'une des revendications précédentes, caractérisé en ce qu'une chambre cylindrique (30; 130) est reliée à un tube de perlage (58) dont l'ouverture de perlage est disposée à la profondeur de mesure, et la pression hydrostatique, constatée à l'aide du dispositif de mesure de force (18), peut être transmise à un dispositif évaluateur (100) afin de déterminer le volume et/ou la masse du liquide.

9. Dispositif de pesage de réservoir selon la revendication 8, caractérisé en ce que le dispositif de mesure de pression est un dispositif de mesure de pression différentielle (80; 180), dont une chambre cylindrique (30; 130) est reliée au tube de perlage (58), tandis que l'autre chambre cylindrique (30; 130) est reliée par une conduite (82), lorsque le réservoir (50) est fermé, à l'espace (92) qui se trouve au-dessus du liquide.

10. Dispositif de pesage de réservoir selon la revendication 8, caractérisé en ce que le dispositif de mesure de pression est un dispositif de mesure de pression différentielle (80; 180), dont une chambre cylindrique (30; 130) est reliée à un premier tube de perlage (58) dont l'ouverture de perlage est disposée à la profondeur de mesure dans le réservoir (50), tandis que l'autre chambre cylindrique (30; 130) est reliée, par un deuxième tube de perlage (96) dont l'ouverture de perlage est disposée au niveau d'un toit flottant (94), à un compartiment (74) qui est disposé dans le toit flottant (94) et qui est ouvert vers la surface du liquide.

11. Dispositif de pesage de réservoir selon l'une des revendications 8 à 10, caractérisé en ce que le fluide pour les paliers est un gaz, et le gaz pour les paliers qui s'écoule dans les chambres cylindriques (130) peut être amené aux tubes de perlage (58,96).

12. Dispositif de pesage de réservoir selon l'une des revendications 8 à 11, caractérisé en ce que le tube de perlage, qui est utilisé pour déterminer la pression du liquide à peser, est introduit par le côté dans la région inférieure du réservoir (50).

13. Dispositif de pesage de réservoir selon l'une des revendications 8 à 12, caractérisé en ce qu une autre ou l'autre chambre cylindrique (230) peut être reliée à un deuxième tube de perlage (158) dont l'ouverture de perlage est disposée à une autre profondeur que celle du premier tube de perlage (156), et en ce que la densité du liquide peut être calculée dans le dispositif évaluateur (100), à partir de la différence des pressions qui règnent dans les tubes de perlage (156,158).

14. Dispositif de pesage de réservoir selon la revendication 13, caractérisé en ce que l'autre chambre cylindrique (230) peut être sollicitée au choix, soit par la pression régnant au deuxième tube de perlage (158), soit par la pression atmosphérique, pour un réservoir (50) ouvert, ou bien par la pression régnant au-dessus du liquide dans un réservoir fermé, ou par une autre pression, de sorte que le dispositif évaluateur (100) permet de déterminer, à l'aide de la densité calculée, de la pression différentielle constatée et des dimensions géométriques du réservoir (50; 150), le niveau effectif, le volume et/ou la masse du liquide (90) qui se trouve dans le réservoir.

Fig 2

Fig 1

Fig 6

Fig 3

Fig 4

EP 0 203 364 B1

Fig 5

Fig 7

Fig 8

Fig 9

Fig 10